# FASCICULE DE BREVET EUROPEEN

(11) **EP 2 346 140 B1**
(45) Date de publication et mention de la délivrance du brevet: **09.09.2015**
(21) Numéro de dépôt: 10354089.4
(22) Date de dépôt: 13.12.2010
(51) Int. Cl.: H02J 1/00, H02J 3/00, H02J 3/14, H02J 4/00, H02J 13/00, H02H 7/22, H02H 7/26

(54) **Dispositif de contrôle et de protection pour une installation électrique**
Kontroll- und Schutzvorrichtung für eine elektrische Anlage
Control and protection device for an electric facility

(30) Priorité: 15.01.2010 FR 1000148
(43) Date de publication de la demande: 20.07.2011
(73) Titulaire: Schneider Electric Industries SAS, 92500 Rueil-Malmaison (FR)
(72) Inventeur: Lack, Bertrand, 38050 Grenoble Cedex 09 (FR); Suptitz, Eric, 38050 Grenoble Cedex 09 (FR); Sacre, Pierre, 38050 Grenoble Cedex 09 (FR); Bohlen, Meinhard, 38050 Grenoble Cedex 09 (FR); Mussi, Severino, 38050 Grenoble Cedex 09 (FR); Flament, Patrick, 38050 Grenoble Cedex 09 (FR)
(74) Mandataire: Péru, Laurence

(56) Documents cités:
- EP-A1- 0 577 532
- EP-A1- 0 911 777
- EP-A2- 1 170 848
- WO-A1-2009/053384
- FR-A1- 2 688 951
- US-A- 5 170 310
- US-A1- 2004 024 475

## Description

### DOMAINE TECHNIQUE

L'invention concerne un dispositif de contrôle et de protection électrique programmé par défaut et reconfigurable de façon centralisée, permettant de commander et protéger individuellement des groupes d'effecteurs de puissance de natures différentes ; chacun des effecteurs peut en outre être associé à un dispositif de réception de commande et/ou un dispositif de contrôle de type capteur. Plus particulièrement, l'invention est relative à un dispositif de distribution, commande et protection comprenant une pluralité de modules aptes à commander chacun trois types au moins de sorties, une partie de la commande étant préprogrammée.

### ETAT DE LA TECHNIQUE

Des modules de commande autorisant le pilotage d'un ou plusieurs effecteurs de forte puissance placés à distance dans un espace d'intervention peuvent comporter des interfaces commande très basse tension, c'est-à-dire à des tensions alternatives inférieures à 50 V ou continues inférieures à 120 V, valeurs définies dans la norme française NF C 15-100. Ce type de dispositif privilégiant la sécurité de l'utilisateur peut être employé dans des applications liées à des établissements publics ou résidentiels.

L'installation et la mise en oeuvre de modules de commande comprenant plusieurs interfaces multi-commandes dans une plateforme d'intervention est complexe à réaliser pour un installateur, tout comme la maintenance. A titre d'exemple, pour une installation électrique comprenant des luminaires, des moyens d'occultation ou tout autre récepteur électrique fonctionnant en tout ou rien, les interfaces de commande nécessitent généralement un interrupteur et un câble reliant ladite interface à l'effecteur. La complexité provient du nombre de câbles à mettre en oeuvre, du nombre d'interconnexions à réaliser et des risques inhérents d'erreurs de câblage. La complexité est encore accrue pour les points de commande multiples d'un effecteur (de type télérupteur ou va-et-vient) et/ou la commande progressive (de type gradateur ou « *dimmer* »).

Dans tous les cas, chaque câble ne peut réaliser qu'une fonction de commande, et donc ne piloter qu'un seul effecteur. Pour des commandes multiples, il est possible qu'un module associé à des organes de commande envoie des ordres à plusieurs effecteurs. Ces commandes multiples ne permettent cependant pas un paramétrage complet et personnalisé d'une installation, tous les effecteurs changeant d'état en même temps : voir par exemple FR 2 688 951.

Pour une configuration plus complexe d'une installation, en particulier dans le cas où plusieurs espaces doivent être contrôlés individuellement, l'utilisation de bus de commande, filaires ou de type radio, peut être préconisée. Dans ce type d'installation, des ordinateurs, automates programmables ou unités centrales peuvent agir séquentiellement et individuellement sur chaque effecteur ; de tels systèmes sont par exemple décrits dans EP 0 577 532, EP 0 911 777, US 5 170 310, EP 1 170 848 ou WO 2005/0576670.

Cependant, ces appareils de programmation sont complexes, coûteux, et peu compatibles avec des installations électriques. Qui plus est, chaque commande doit être appairée avec un effecteur, procédure d'adressage qui nécessite l'utilisation de matériels spécifiques tels qu'un contrôleur et/ou une interface de programmation ; la mise en place de ces appareils nécessite souvent une connaissance parfaite des langages de programmation et des procédés de commande des modules de l'installation. Les opérations de câblage et de programmation sont alors réalisées par des intervenants de différents métiers, ce qui est une source d'erreur et de complexité. La maintenance nécessite par ailleurs l'intervention d'agents techniques spécialisés, et, en cas d'extension de l'installation pour ajouter de nouveaux effecteurs, une nouvelle procédure d'appairage peut être nécessaire.

On note également le document US 2004/024475 A du 5 Février 2004 qui décrit un système de protection de circuit.

### EXPOSE DE L'INVENTION

L'invention est définie par les caractéristiques de la revendication indépendante. Les modes de réalisations préféré sont définis par les revendications dépendantes.

Parmi autres avantages, l'invention vise à pallier des inconvénients des dispositifs existants, et propose un dispositif permettant une commande centralisée d'un ensemble d'espaces dans laquelle une programmation par défaut est associée à une optimisation des raccordements nécessaires de sorte que la mise en oeuvre du dispositif est facile.

En particulier, l'invention concerne un dispositif de distribution et de contrôle d'une installation électrique, comprenant de préférence des fonctions de protection. L'installation électrique, par exemple une zone d'intervention d'un bâtiment, peut être séparée en une pluralité d'entités, de préférence de deux à quatre espaces de type bureau, chaque entité étant dotée d'une pluralité d'effecteurs de puissance de type différent, notamment l'éclairage, la climatisation et l'occultation des fenêtres, et d'une pluralité de récepteurs de commande, en particulier un interrupteur et un bouton d'actionnement de l'occultation ; avantageusement, des capteurs de détection de présence, de luminosité, ou autres fonctions de confort et d'efficacité, comme le taux de CO₂ sont en outre prévus dans chaque entité pour le contrôle.

Le dispositif selon l'invention est logé dans un boîtier sur lequel sont identifiées des parties relatives à chacune des entités de l'installation, et correspondant à des modules du dispositif selon l'invention de façon à simplifier la mise en place du dispositif. Chaque module comprend ainsi un nombre d'entrées correspondant au nombre de récepteurs de commande et de capteurs de chaque entité, un nombre de sorties correspondant au nombre d'effecteurs d'une entité, lesdites sorties étant de type différent, et des moyens de commande locaux permettant d'émettre un signal pour chaque sortie. Avantageusement, au moins les deuxièmes entrées raccordées aux capteurs sont associées à des moyens de traitement de leurs signaux propres à chaque module. De préférence, chaque sortie est en outre associée à des moyens de protection statique contre les courts-circuits au niveau de la charge ; pour éviter tout problème de câblage, il est souhaitable que les sorties soient associées à des connecteurs de type différent.

Le dispositif selon l'invention comprend en outre des moyens de commande centralisée raccordés à chaque module via les moyens de commande des sorties, ainsi qu'éventuellement les moyens de traitement des signaux d'entrée. Les moyens de commande centraux sont programmés par défaut, et adaptés pour que les signaux de sortie de chaque module dépendent d'un programme desdits moyens, en fonction des signaux des entrées raccordées aux capteurs dudit module, et réagissent en priorité aux signaux des premières entrées raccordées aux récepteurs de commande qui leur sont associés. Pour une sortie de type éclairage, il est préféré que la commande soit réalisée par l'intermédiaire d'un bus de type DALI (*« Digital Addressable Lighting Interface* ») relié en parallèle à chaque module : cette option permet d'identifier le connecteur de raccordement ; de plus, en présence des moyens de commutation statique de chaque sortie, les moyens de commande centralisée sont avantageusement prévus pour que l'adressage selon le protocole DALI soit automatique. De préférence, les moyens de commande centralisée comprennent par ailleurs des moyens de communication permettant de modifier leur programmation, par exemple un port ethernet ou un bus de communication, le dispositif de contrôle selon l'invention étant par exemple raccordé à un réseau de surveillance global.

Les moyens de commande centralisée sont en outre adaptés pour permettre un regroupement d'une pluralité de modules de sorte qu'un signal d'entrée de commande au niveau d'un module du groupe entraîne le même signal de sortie pour tous les modules dudit groupe. A cette fin, chaque module du dispositif selon l'invention est muni d'une interface, par exemple un bouton-poussoir, permettant d'activer un regroupement au niveau de moyens de configuration agissant directement sur le programme des moyens de commande centralisée. De préférence, les moyens de configuration ne peuvent être modifiés qu'après activation volontaire, par exemple par l'intermédiaire d'un bouton d'activation du boîtier du dispositif de contrôle.

Le dispositif selon l'invention est en outre adapté pour la distribution électrique au sein des entités contrôlées. Le dispositif comprend ainsi une entrée d'alimentation, de préférence munie de moyens de protection de type disjoncteur et/ou sectionneur, et un nombre de lignes de distribution correspondant au nombre de sorties de chaque module, de façon à alimenter de façon séparée chaque type d'effecteur. Avantageusement, des moyens de mesure de la consommation énergétique sont prévus, notamment au niveau de l'entrée d'alimentation pour la consommation globale, et au niveau des sorties particulièrement consommatrices, comme l'éclairage ou la climatisation, sur les lignes d'alimentation concernées.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1 montre le cloisonnement d'un bâtiment en zones d'exploitation dans lesquelles peut être mis en place un dispositif selon l'invention.
Les figures 2 illustrent les différentes fonctionnalités d'un dispositif selon un mode de réalisation de l'invention : la figure 2A représente la partie distribution et protection électrique, la figure 2B représente la partie contrôle/commande et la figure 2C représente un mode d'adressage et de commande lumineuse.
La figure 3 représente un dispositif selon un mode de réalisation préféré de l'invention et illustre l'interface homme / machine.
La figure 4 montre partiellement le fonctionnement d'un dispositif selon un mode de réalisation de l'invention.

### DESCRIPTION DETAILLEE D'UN MODE DE REALISATION PREFERE

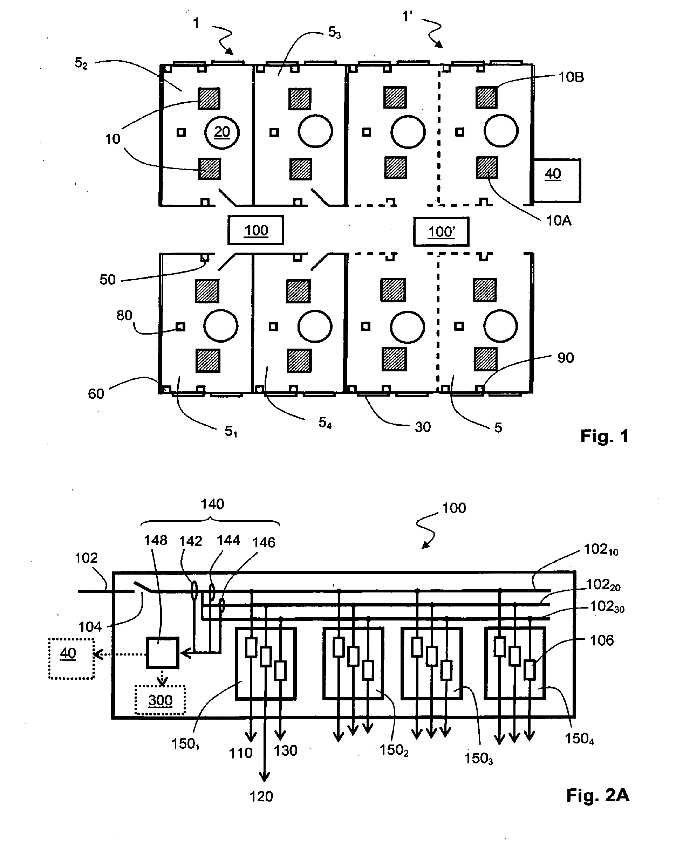

Dans une utilisation préférée illustrée en vue de dessus en figure 1, une zone d'exploitation 1 peut être découpée en quatre espaces d'intervention 5ᵢ. Chaque espace 5, par exemple un bureau, comprend au moins trois types d'effecteurs de puissance destinés à actionner conjointement une charge de type différent, notamment l'éclairage 10, des moyens de chauffage et/ou climatisation 20, des moyens d'occultation 30 tels que des stores ou volets électriques. Tel qu'usuel, l'ensemble des zones d'exploitation 1 du bâtiment peut être connecté à un réseau central 40 de supervision du bâtiment ; de préférence, la commande de la climatisation est centralisée au niveau de ce réseau 40 et non accessible à l'usager, alors que les deux autres effecteurs 10, 30 peuvent être actionnés manuellement par l'intermédiaire de récepteurs de commande, notamment un interrupteur 50, éventuellement muni de moyens de gradation (« *dimmer* ») et un bouton poussoir 60. En particulier, les effecteurs de puissance 10, 20, 30 fonctionnent sous des tensions alternatives, et peuvent être commandés par des récepteurs de commande 50, 60 très basse tension.

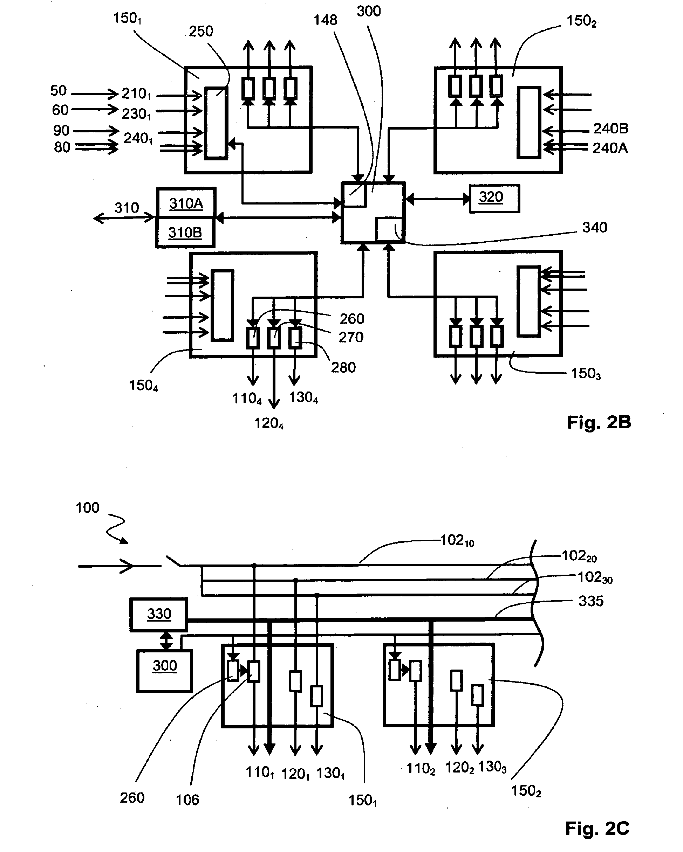

Le dispositif de commande 100 selon l'invention est de préférence placé de façon à optimiser les distances de câblage vers chacun des espaces 5ᵢ, notamment dans le faux plafond de la zone d'exploitation 1. Tel que schématisé dans les figures 2, le dispositif de contrôle/commande centralisé 100 comprend ainsi une entrée 102 pour son alimentation et distribuant de la puissance vers un nombre de sorties 110, 120, 130 adapté au nombre d'effecteurs 10, 20, 30, notamment quatre fois trois ; en particulier, tel qu'il apparaîtra clairement plus loin, les sorties de même type sont alimentées par une même ligne qui leur est propre, et le dispositif 100 comprend trois lignes 102₁₀, 102₂₀, 102₃₀ en parallèle. Dans un mode de réalisation préféré, le dispositif de commande 100 comprend des moyens de protection centrale 104 à l'entrée 102 d'alimentation de puissance, par exemple un bloc de sectionnement et/ou un disjoncteur électromécanique de protection.

Avantageusement, tel que schématisé en figure 2A, chacune des sorties 110, 120, 130 est en outre associée à un dispositif de protection individuel additionnel 106 ; de préférence, le dispositif de protection individuel 106 est électronique, et réalisé par l'association de transistors et de moyens de mesure de courant et d'isolation, tel que par exemple décrit dans WO 2009/124818, ce qui permet de garantir une protection optimale de chacune des lignes. Qui plus est, ce choix d'une technologie de commutation électronique statique fournit une sélectivité sans égale et donc une continuité de service, seule la sortie en défaut étant déclenchée. Par ailleurs, ce type de protection peut être réarmé à distance, par actionnement d'un récepteur qui peut faire partie du dispositif 100 selon l'invention, ou par ordre depuis le réseau central de commande et de supervision 40.

De préférence, le dispositif de commande 100 selon l'invention est muni de moyens 140 permettant de déterminer la consommation électrique globale de la zone d'exploitation 1, et comprend un circuit de mesure du courant 142 au niveau de l'entrée d'alimentation 102. Avantageusement, pour optimiser l'efficacité énergétique au sein de ladite zone 1, des moyens de mesure différenciés sont prévus pour permettre des analyses de la consommation, de façon à éventuellement modifier les usages. En particulier, le dispositif 100 selon l'invention comprend, sur leur ligne respective 102₁₀, 102₂₀, des moyens de mesure 144, 146 de la consommation concernant deux types de sortie 110, 120, tels que l'éclairage et la climatisation. Le dispositif 100 peut alors comprendre des moyens de traitement 148 des données relatives à la consommation énergétique, par exemple une carte de circuit imprimé ; alternativement, ces données peuvent être transmises directement au réseau central de supervision 40.

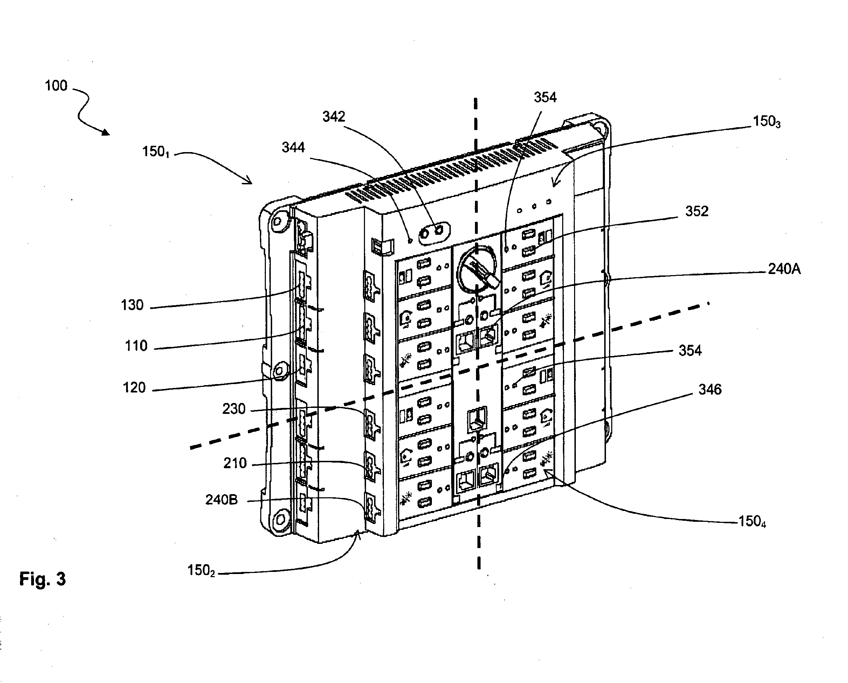

Outre l'alimentation électrique, le dispositif 100 selon l'invention est adapté pour la commande de chacun des effecteurs 10, 20, 30, ceux-ci étant regroupés par espace d'intervention 5. Selon l'invention, le processus de mise en oeuvre est facilité, avec notamment une programmation par défaut intégrée au système et un raccordement intuitif des câbles. En particulier, tel qu'illustré en figure 2B, le dispositif 100 préféré selon l'invention comprend quatre modules de commande 150ᵢ, munis chacun de trois types de sorties 110_{i,} 120;, 130ᵢ vers chaque type d'effecteur 10, 20, 30 ; de préférence (voir aussi figure 3), les modules 150ᵢ sont clairement identifiés sur la face du boîtier du dispositif de commande 100. La commande est réalisée selon une programmation centralisée, mais aussi suite à des signaux d'entrée locaux. En particulier, des récepteurs de commande manuelle 50, 60 peuvent être actionnés pour modifier certaines sorties 110, 130 ; par exemple, seules deux des commandes 110, 130, et non la climatisation 20, sont accessibles par une entrée externe susceptible d'être actionnée par un utilisateur, et chaque module de commande 150 comprend une entrée 210, 230 destinée à ces types de sortie 110, 130 et reliée aux récepteurs de commande 50, 60. Afin de faciliter les raccordements, il est avantageux d'utiliser des câbles de type détrompés de sorte que l'installateur connecte les câbles relatifs à, par exemple, l'éclairage 10 uniquement sur ce type d'entrée/sortie 110, 210 ; il est également préférable que les entrées et sorties de même type soient associées, par exemple en étant identifiées par des pictogrammes sur le boîtier du dispositif de contrôle 100, et/ou localisées face à face ou parallèlement sur deux niveaux différents (figure 3).

Avantageusement, pour plus de flexibilité et augmenter l'efficacité énergétique de la zone d'exploitation 1, chaque module 150 du dispositif 100 comprend par ailleurs au moins une entrée 240 pour des paramètres externes locaux, qui sont fournis par l'intermédiaire de capteurs appropriés. Par exemple un capteur de luminosité et un capteur de présence 80 dans l'espace d'intervention 5 fournissent leurs informations à une entrée 240A muti-paramètres ; un capteur 90 informe une deuxième entrée 240B de la fermeture ou non de la fenêtre dudit espace 5,... Il est préférable, tant pour optimiser la durée de traitement des informations que pour simplifier le câblage et garantir une isolation de sécurité entre les signaux d'entrée de très basse tension et les signaux de puissance, que les différents capteurs 80, 90 fournissent un signal à des moyens de traitement 250, par exemple un microprocesseur ; avantageusement, les récepteurs de commande 50, 60 sont eux aussi directement connectés aux moyens de traitement 250.

Les signaux des entrées 210, 230, 240, une fois traités, sont alors transférés aux moyens de commande 260, 270, 280 de chaque sortie 110, 120, 130 du module 150 correspondant ; le transfert est réalisé via des moyens de commande centralisée du dispositif 100 selon l'invention, par exemple un microprocesseur 300, permettant une gestion optimale de la zone d'exploitation 1. Les moyens centraux 300 peuvent être autonomes et/ou reliés au réseau 40 de supervision du bâtiment par des moyens de communication 310 adaptés, par exemple selon un protocole sélectionné par un bus de terrain 310A, et/ou via ethernet 310B par le protocole TCP/IP. Les moyens centraux 300 coordonnent et gèrent l'ensemble des fonctionnalités du dispositif 100 selon l'invention, et donc veillent à l'efficacité énergétique dans la zone concernée 1 ; avantageusement, la carte de traitement 148 des données relatives à la consommation énergétique est comprise dans les moyens de commande centralisée 300.

Selon l'invention, les moyens de commande centralisée 300 sont programmés par défaut de façon appropriée. Par exemple, il peut être prévu : une extinction des lumières 10 si le capteur de présence 80 fournit un signal négatif pendant plus de 15 minutes ; une commande graduelle fournissant un niveau constant minimal de 350 lux en journée ; une occultation automatique des fenêtres si la lumière excède 1000 lux; une interdiction de climatisation si le capteur adapté 90 détecte qu'une fenêtre est ouverte ;...

L'installation du dispositif de contrôle 100 selon l'invention est donc facilitée : le raccordement des câbles se fait de façon intuitive au niveau de chacun des modules 150 clairement identifiés (figure 3) ; une programmation par défaut permet alors immédiatement une commande adaptée des effecteurs 10, 20, 30 raccordés, via les récepteurs de commande 50, 60, en respectant éventuellement, si nécessaire, des consignes issues du réseau de surveillance 40 et/ou des moyens de commande centralisée 300. Avantageusement, l'actionnement du store 30 et/ou de la lumière 10 est réalisé par une technologie sans fil, voire sans pile, par l'intermédiaire d'interrupteurs autoalimentées 50, 60 de type radiofréquence pour une maintenance facilitée et une plus grande flexibilité ; le dispositif 100 selon l'invention est à cet effet de préférence muni d'une carte d'émission/réception radiofréquence 320. Le raccordement des capteurs 80, 90 peut être réalisé par tout moyen, par des entrées câblées, éventuellement de type différent selon que l'information est binaire 240B, ou multiple auquel cas une connectique 240A de type RJ11 peut être prévue, voire par l'intermédiaire d'un module sans fil, par exemple via la carte radiofréquence 320.

Selon le mode de réalisation préféré présenté, la commande 230 de la sortie d'occultation 130 est couplée à une fonction d'inversion de phase, de sorte que la sortie est un connecteur quatre points, qui se distingue clairement du raccordement trois points de la commande de climatisation 120, réalisée par une sortie de puissance d'alimentation simple, la commande étant réalisée par un contrôleur externe, propre à chaque système de climatisation, lui-même connecté au réseau central de commande et de supervision 40. Alternativement, la commande de climatisation peut aussi être réalisée par le dispositif de contrôle 100 selon l'invention, avec une modulation de type PWM pour effectivement commander des vannes et une commande multiple de vitesse pour un ventilo-convecteur. Bien que d'autres options soient possibles, avantageusement, la commande lumineuse 110 est réalisée par l'intermédiaire du protocole DALI (*« Digital Addressable Lighting Interface* ») afin de gérer au mieux l'éclairage, les connecteurs adaptés à ce protocole (5 points) permettant alors une identification directe.

Pour simplifier encore l'installation du dispositif 100, l'adressage des appareils 10 relatifs à la commande lumineuse se fait de préférence automatiquement grâce à la présence des dispositifs de protection statique 106 sur chaque départ 110. Ainsi, le dispositif 100 selon l'invention comprend un contrôleur DALI 330 sur un bus 335 commun aux quatre modules de commande 150 et donc à toutes les sorties de type éclairage 110, en parallèle de l'alimentation 102₁₀. A la mise sous tension du dispositif 100 selon l'invention, chaque sortie 110ᵢ est individuellement et alternativement alimentée par l'intermédiaire des moyens centralisés 300 et des moyens de commande individuels 260ᵢ qui permettent de placer le dispositif de commutation 106 en mode passant ; tel que schématisé en figure 2C, les sorties d'éclairage 110ᵢ,ᵢ ≠ 1 de trois modules 150ᵢ,_{i≠1} sont déconnectées, et tous les composants connectés sur la sortie 110₁ alimentée sont scannés et associés en groupe selon le protocole DALI, qui leur attribue à chacun une seule adresse permettant la commande commune de tous les éclairages raccordés au module 150₁.

De préférence, les moyens centralisés 300 sont adaptés pour pouvoir être reprogrammés, notamment par la présence d'une interface de programmation, par exemple via les moyens de communication 310B, pouvant permettre une modification du paramétrage initial en cas de modification de l'utilisation du dispositif 100 selon l'invention sans nécessiter sa refonte. Par exemple, un algorithme d'efficacité énergétique peut être implémenté pour arbitrer entre les différentes charges lorsqu'une consommation excessive est déterminée. Alternativement, la configuration peut être modifiée directement sur le réseau de supervision 40 du bâtiment, via l'interface du bus de terrain 310A et ses outils de programmation appropriés.

Le dispositif 100 selon l'invention est également muni de moyens permettant de regrouper les espaces d'intervention 5, par exemple en cas de réorganisation de la zone d'exploitation 1. En particulier, il est possible pour l'installateur de signaler au dispositif 100 selon l'invention que deux ou trois des modules 150, voire les quatre, concernent en réalité un environnement unique, par exemple un agencement de type *« open space »* l' (figure 1). A cette fin, le dispositif 100 selon l'invention est muni de moyens 340 de configuration locale permettant d'associer les modules 150ᵢ de sorte que les moyens centralisés 300 envoient les mêmes ordres de commande pour les groupes de modules 150ᵢ concernés. En particulier, les moyens de configuration 340 peuvent comprendre un mode spécifique implémenté dans les moyens centraux 300, une interface de type bouton-poussoir 342 permettant l'activation de ce mode, avantageusement couplée à une interface 344 de signalisation, par exemple une diode électroluminescente, et un bouton poussoir 346ᵢ par module 150ᵢ. Par exemple, pour que les espaces 5₁, 5₂, 5₃ soient traités comme un groupe, l'utilisateur met en oeuvre les moyens de configuration 340 par l'intermédiaire du bouton 342, puis appuie successivement sur les boutons 346₁, 346₂, 346₃. Une commande d'éclairage 210ᵢ,ᵢ=_{1à3} sur un seul récepteur 50 des trois espaces, et donc un seul des trois modules de commande 150₁, 150_{2,} 150₃ activera touts les sorties éclairage 10 de l'ensemble des espaces 5₁, 5₂, 5₃ ; alternativement pour une extinction automatique, il faudra que les trois détecteurs de présence 80 signalent une absence pour que les moyens de commande 300 déclenchent l'extinction.

Tel qu'illustré en figure 3 et présenté plus haut, le dispositif 100 selon l'invention est conçu pour que l'interface homme/machine soit le plus convivial possible. Avantageusement, un système indicateur 350, par exemple composé de diodes électroluminescentes, est prévu pour vérifier sur chaque module 150 le bon fonctionnement et le bon câblage; en particulier, un ou deux boutons 352 par sortie 110, 210, 310 permettent de simuler l'actionnement de ladite sortie, et une diode électroluminescente 354 associée permet de valider le câblage.

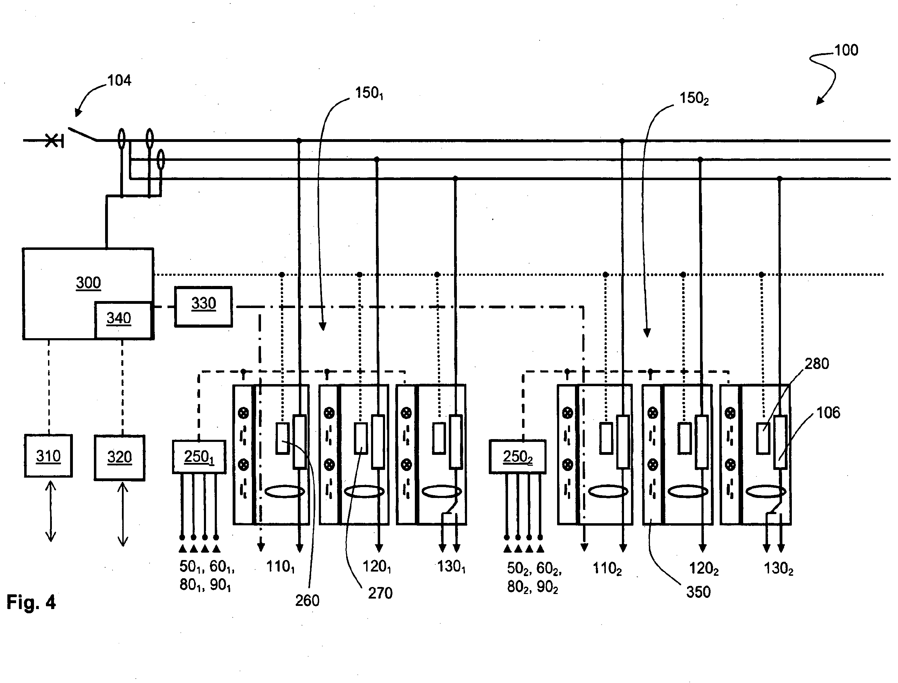

Le dispositif 100 selon le mode préféré de l'invention illustré en figure 3 et dont le mode de fonctionnement est schématisé en figure 4 permet donc de combiner les quatre fonctions suivantes :
- distribution d'énergie ;
- protection contre les courts-circuits, les surcharges et les fuites à la terre de 10 mA
   - la protection est en outre entièrement sélective grâce à la technologie de commutation électronique 106, ce qui permet une limitation rapide du courant de court-circuit et prévient les effets cascade de la protection amont 104 ;
- mesure de la consommation totale du dispositif et de ses charges associées avec une précision de classe 1, associée de préférence à une mesure de la consommation générale d'éclairage et de climatisation avec une précision de 2,5 % ;
- commande de type «tout ou rien» ou graduelle des charges d'éclairage, d'occultation et de climatisation qui lui sont associées.

Les différentes fonctions sont réalisées par un dispositif 100 de conception simple, en limitant la longueur de câble grâce à une alimentation amont partagée 102 et un point de connexion de commande 210, 230, 240 proche du lieu d'installation des capteurs 80, 90 et récepteurs 40, 50, et en réduisant le temps nécessaire à sa mise en place. Adaptée à tout type de bâtiment et à tous les protocoles ouverts, la solution selon l'invention couple de fait les fonctions de la distribution électrique et de l'automatisation, en particulier en étant apte à fournir à un système de contrôle du bâtiment 40 toutes les données relatives à la mesure, à la protection et au statut des sorties en un format natif. La capacité à commander, individuellement ou sur une maille d'espaces 5ᵢ regroupés, les charges et d'obtenir les informations relatives permet d'optimiser la consommation énergétique des bâtiments par un contrôle/commande fin. Ces avantages jouant sur l'efficacité énergétique ne sont cependant pas associés à un système figé, et le dispositif selon l'invention peut s'adapter aux évolutions du bâtiment.

De façon générale, le dispositif 100 selon l'invention offre un compromis optimal entre facilité d'installation et variété de paramétrages, ceci avec des coûts de matériel et de mise en oeuvre réduits. En particulier, la spécialisation des entrées/sorties par type d'application, avec l'embarquement des spécificités propres concernant leur contrôle/commande, permet de faciliter le raccordement du dispositif selon l'invention ; la pré-configuration et l'adressage automatique permettent une mise en place facilitée.

Bien que le dispositif précédent 100 présente une gamme de fonctions optimisée, il est possible grâce à la conception de ses sorties 210, 230, 240, d'utiliser le dispositif précédent 100, muni de quatre modules 150 à quatre entrées et trois sorties, dans une autre configuration. En particulier, sans modifier les moyens internes de traitement des données, il est possible de paramétrer le système et de prévoir des sorties de nature différentes : par exemple, pour un bâtiment sans moyens d'occultation 30, il est possible de prévoir deux types de sorties pour l'éclairage de chaque zone, par exemple de différencier l'éclairage côté couloir 10A de l'éclairage côté fenêtre 10B, les entrées étant adaptées en conséquence. De même, si seuls deux effecteurs d'air conditionné 20 sont présents dans la zone d'exploitation 1, il est possible d'utiliser deux des sorties 120 pour des éclairages individualisés ; inversement, tel que présenté plus haut, il est possible d'utiliser une des entrées 240 pour une commande de la climatisation 120. Ainsi, il est possible d'optimiser les coûts de stockage et de fabrication, en utilisant des éléments standardisés pour une gamme complète de dispositifs de commande 100 selon l'invention adaptés à la configuration des espaces de travail 1, 5.

Par ailleurs, d'autres éléments peuvent également être concernés par l'invention qui ne se limite pas aux modes de réalisation présentés. En particulier, le nombre de modules peut être ajusté à la pratique du bâtiment, avec par exemple des zones d'exploitation 1 comprenant deux, six espaces, ou plus ; le nombre d'entrées/sorties par module 150 peut être diminué ou augmenté en fonction du nombre d'entités individuelles à gérer sur la plateforme 1 de bureaux, avec par exemple une application supplémentaire vers des moyens informatiques, ou un nombre de capteurs accru. Le type de capteur peut quant à lui être adapté, tout comme la nature des sorties... ; d'autres fonctionnalités, telle que la détection de la présence de charge peuvent être ajoutées.

## Revendications

1. Dispositif de distribution et de contrôle (100) d'une installation électrique (1), ladite installation (1) comprenant un premier nombre d'entités (5), chaque entité (5) étant dotée d'un deuxième nombre d'effecteurs de puissance (10, 20, 30) de types différents, ledit dispositif (100) comprenant :
- une entrée (102) d'alimentation et un deuxième nombre de lignes de distribution électrique de puissance (102₁₀, 102₂₀, 102₃₀) ;
- un premier nombre de modules (150), chaque module (150) comprenant :
- un deuxième nombre de sorties (110, 120, 130) de type différent pouvant se raccorder auxdits effecteurs (10, 20, 30), chaque type de sortie étant alimenté par une ligne (102ⱼ) de distribution différente,
- des moyens de commande locaux (260, 270, 280) associés à chaque sortie (110, 120, 130), pour commander lesdits effecteurs (10, 20, 30) individuellement, et
- un troisième nombre d'entrées (210, 230, 240), comprenant une pluralité de premières entrées pouvant être raccordées à un récepteur de commande (50, 60) directe pour une pluralité de sorties (110, 130), et au moins une deuxième entrée pouvant être raccordée à des moyens de contrôle (80, 90) ;
- des moyens de commande (300) centralisée adaptés pour que les signaux de sortie (110, 120, 130) de chaque module (150) dépendent directement des signaux des premières entrées (210, 230) dudit module (150), et pour que les signaux de sortie (110, 120, 130) de chaque module (150) dépendent, en l'absence desdits signaux des premières entrées (210, 230), d'un programme desdits moyens de commande (300) et des signaux des deuxièmes entrées dudit module (150) ;
- des moyens de configuration (340) au niveau des moyens de commande centralisée (300) comprenant une interface (346ᵢ) de configuration associé à chaque module (150ᵢ), de sorte que l'actionnement d'une pluralité d'interfaces (346) entraîne une commande unique pour les sorties de la pluralité de modules (150) correspondante.

2. Dispositif (100) selon la revendication 1 comprenant en outre des moyens de protection statique (106) pour chaque sortie (110, 120, 130) dudit dispositif (100).

3. Dispositif (100) selon l'une des revendications précédentes comprenant en outre un dispositif de protection (104) à l'entrée d'alimentation (102).

4. Dispositif (100) selon l'une des revendications précédentes comprenant en outre un bus (335) de type DALI relié en parallèle à une première sortie (110) de chaque module (150ᵢ).

5. Dispositif (100) selon l'une des revendications précédentes dans lequel chaque module (150) comprend en outre des moyens de traitement (250) de signaux des deuxièmes entrées (240) au moins.

6. Dispositif (100) selon l'une des revendications précédentes comprenant en outre des moyens de mesure (140) de la consommation électrique d'une pluralité de sorties.

7. Dispositif (100) selon l'une des revendications précédentes comprenant en outre des moyens de communication (310, 320) permettant de modifier le programme des moyens de commande centralisés (300).

8. Dispositif (100) selon l'une des revendications précédentes comprenant un boîtier dans lequel peut être identifié un premier nombre de parties distinctes, chaque partie comprenant tous les éléments relatifs à un module (150), en particulier les connecteurs de sortie et actionneurs de configuration (346).

9. Dispositif (100) selon l'une des revendications précédentes comprenant quatre modules (150) avec chacun au moins trois types de sorties différentes et quatre entrées.

10. Dispositif (100) selon l'une des revendications précédentes dans lequel un premier type de sortie (110) peut être raccordé à l'éclairage, un deuxième type de sortie (120) peut être raccordé à la climatisation (20), un troisième type de sortie peut être raccordé à des moyens d'occultation (30), et dans lequel les premières entrées (210, 230) sont relatives aux premiers et deuxième type de sorties (110, 130) et les deuxièmes entrées sont raccordées à des capteurs (80, 90).

## Patentansprüche

1. Verteilungs- und Kontrollvorrichtung (100) für eine elektrische Anlage (1), wobei die Anlage (1) eine erste Anzahl von Einheiten (5) umfasst, wobei jede Einheit (5) mit einer zweiten Anzahl von Leistungseffektoren (10, 20, 30) unterschiedlicher Typen versehen ist, wobei die Vorrichtung (100) umfasst:
- einen Versorgungseingang (102) und eine zweite Anzahl von elektrischen Leistungsverteilungsleitungen (102₁₀, 102₂₀, 102₃₀);
- eine erste Anzahl von Modulen (150), wobei jedes Modul (150) umfasst:
- eine zweite Anzahl von Ausgängen (110, 120, 130) unterschiedlichen Typs, die sich an die Effektoren (10, 20, 30) anschließen können, wobei jeder Ausgangstyp von einer unterschiedlichen Verteilungsleitung (102ⱼ) versorgt wird,
- lokale Steuermittel (260, 270, 280), die jedem Ausgang (110, 120, 130) zugeordnet sind, um die Effektoren (10, 20, 30) individuell zu steuern, und
- eine dritte Anzahl von Eingängen (210, 230, 240), umfassend eine Vielzahl von ersten Eingängen, die an einem Empfänger (50, 60) zur direkten Steuerung für eine Vielzahl von Ausgängen (110, 130) angeschlossen werden können, und mindestens einen zweiten Eingang, der an Kontrollmittel (80, 90) angeschlossen werden kann;
- Mittel (300) zur zentralisierten Steuerung, die dazu vorgesehen sind, dass die Ausgangssignale (110, 120, 130) jedes Moduls (150) direkt von den Signalen der ersten Eingänge (210, 230) des Moduls (150) abhängen, und dass die Ausgangssignale (110, 120, 130) jedes Moduls (150) bei Nichtvorhandensein der ersten Eingänge (210, 230) von einem Programm der Steuermittel (300) und den Signalen der zweiten Eingänge des Moduls (150) abhängen;
- Konfigurationsmittel (340) im Bereich der zentralisierten Steuermittel (300), umfassend eine Konfigurationsschnittstelle (346ᵢ), die jedem Modul (150ᵢ) zugeordnet ist, so dass die Betätigung einer Vielzahl von Schnittstellen (346) zu einer einzigen Steuerung für die Ausgänge der entsprechenden Vielzahl von Modulen (150) führt.

2. Vorrichtung (100) nach Anspruch 1, ferner umfassend statische Schutzmittel (106) für jeden Ausgang (110, 120, 130) der Vorrichtung (100).

3. Vorrichtung (100) nach einem der vorhergehenden Ansprüche, ferner umfassend eine Schutzvorrichtung (104) am Versorgungseingang (102).

4. Vorrichtung (100) nach einem der vorhergehenden Ansprüche, ferner umfassend einen Bus (335) vom Typ DALI, der parallel mit einem ersten Ausgang (110) jedes Moduls (150ᵢ) verbunden ist.

5. Vorrichtung (100) nach einem der vorhergehenden Ansprüche, bei dem jedes Modul (150) ferner Signalbearbeitungsmittel (250) mindestens der zweiten Eingänge (240) umfasst.

6. Vorrichtung (100) nach einem der vorhergehenden Ansprüche, ferner umfassend Mittel (140) zum Messen des elektrischen Verbrauchs einer Vielzahl von Ausgängen.

7. Vorrichtung (100) nach einem der vorhergehenden Ansprüche, ferner umfassend Kommunikationsmittel (310, 320), die es ermöglichen, das Programm der zentralisierten Steuermittel (300) zu modifizieren.

8. Vorrichtung (100) nach einem der vorhergehenden Ansprüche, umfassend ein Gehäuse, bei dem eine erste Anzahl von getrennten Teilen identifiziert werden kann, wobei jedes Teil alle Elemente in Zusammenhang mit einem Modul (150) umfasst, insbesondere die Ausgangsstecker und die Konfigurationsaktuatoren (346).

9. Vorrichtung (100) nach einem der vorhergehenden Ansprüche, umfassend vier Module (150) mit jeweils mindestens drei Typen von unterschiedlichen Ausgängen und vier Eingängen.

10. Vorrichtung (100) nach einem der vorhergehenden Ansprüche, bei der ein erster Ausgangstyp (110) an die Beleuchtung angeschlossen werden kann, ein zweiter Ausgangstyp (120) an die Klimatisierung (20) angeschlossen werden kann, ein dritter Ausgangstyp an Verdunkelungsmittel (30) angeschlossen werden kann, und bei der die ersten Eingänge (210, 230) mit den ersten und zweiten Ausgangstypen (110, 130) in Zusammenhang stehen, und die zweiten Eingänge an Sensoren (80, 90) angeschlossen sind.

## Claims

1. Distribution and monitoring device (100) of an electrical installation (1), said installation (1) comprising a first number of entities (5), each entity (5) being provided with a second number of power effectors (10, 20, 30) of different types, said device (100) comprising:
- a power supply input (102) and a second number of power electrical distribution lines (102₁₀, 102₂₀, 102₃₀);
- a first number of modules (150), each module (150) comprising:
- a second number of outputs (110, 120, 130) of different types that can be connected to said effectors (10, 20, 30), each type of output being powered by a different distribution line (102ⱼ),
- local control means (260, 270, 280) associated with each output (110, 120, 130), to control said effectors (10, 20, 30) individually, and
- a third number of inputs (210, 230, 240), comprising a plurality of first inputs that can be connected to a direct control receiver (50, 60) for a plurality of outputs (110, 130), and at least one second input that can be connected to monitoring means (80, 90);
- centralised control means (300) adapted for the output signals (110, 120, 130) of each module (150) to depend directly on the signals from the first inputs (210, 230) of said module (150), and for the output signals (110, 120, 130) of each module (150) to depend, in the absence of said signals from the first inputs (210, 230), on a programme of said control means (300) and on the signals from the second inputs of said module (150);
- configuration means (340) on the centralised control means (300) comprising a configuration interface (346ᵢ) associated with each module (150ᵢ), such that the actuation of a plurality of interfaces (346) results in a single control for the outputs of the corresponding plurality of modules (150).

2. Device (100) according to Claim 1, further comprising solid-state protection means (106) for each output (110, 120, 130) of said device (100).

3. Device (100) according to one of the preceding claims, further comprising a protection device (104) at the power supply input (102).

4. Device (100) according to one of the preceding claims, further comprising a bus (335) of DALI-type linked in parallel to a first output (110) of each module (150ᵢ).

5. Device (100) according to one of the preceding claims, in which each module (150) further comprises means (250) for processing signals from at least the second inputs (240).

6. Device (100) according to one of the preceding claims, further comprising means (140) for measuring the electrical consumption of a plurality of outputs.

7. Device (100) according to one of the preceding claims, further comprising communication means (310, 320) making it possible to modify the programme of the centralised control means (300).

8. Device (100) according to one of the preceding claims, comprising a casing in which a first number of distinct parts can be identified, each part comprising all the elements relating to a module (150), in particular the output connectors and configuration actuators (346).

9. Device (100) according to one of the preceding claims, comprising four modules (150) each with at least three different types of outputs and four inputs.

10. Device (100) according to one of the preceding claims, in which a first type of output (110) can be connected to the lighting, a second type of output (120) can be connected to the air-conditioning (20), a third type of output can be connected to covering means (30), and in which the first inputs (210, 230) relate to the first and second type of outputs (110, 130) and the second inputs are connected to sensors (80, 90).
